# EUROPÄISCHE PATENTSCHRIFT

(11) **EP 1 507 751 B1**
(45) Veröffentlichungstag und Bekanntmachung des Hinweises auf die Patenterteilung: **11.01.2006**
(21) Anmeldenummer: 03737918.7
(22) Anmeldetag: 28.05.2003
(51) Int. Cl.: C04B 41/87, C04B 41/89

(54) **KERAMISCHER FORMKÖRPER MIT PHOTOKATALYTISCHER BESCHICHTUNG UND VERFAHREN ZUR HERSTELLUNG DESSELBEN**
CERAMIC MOULDED BODY COMPRISING A PHOTOCATALYTIC COATING AND METHOD FOR PRODUCING THE SAME
CORPS CERAMIQUE MOULE A REVETEMENT PHOTOCATALYTIQUE ET SON PROCEDE DE REALISATION

(30) Priorität: 29.05.2002 DE 10224110
(43) Veröffentlichungstag der Anmeldung: 23.02.2005
(73) Patentinhaber: ERLUS AKTIENGESELLSCHAFT, 84088 Neufahrn (DE)
(72) Erfinder: THIERAUF, Axel, 84066 Mallersdorf-Pfaffenberg (DE); BAUER, Friederike, 93170 Bruhardswald (DE); GAST, Eduard, 84559 Kraiburg (DE)
(74) Vertreter: Köhler, Walter
(86) Internationale Anmeldenummer: PCT/DE2003/001743
(87) Internationale Veröffentlichungsnummer: WO 2003/101913

(56) Entgegenhaltungen:
- EP-A- 1 072 572
- EP-A- 1 095 923
- WO-A-01/79141
- WO-A-99/44954
- FR-A- 2 788 707
- FR-A- 2 816 610
- ROSENBERGER J: "Herstellung und Charakterisierung von dünnen Bariumtitanatschichten" 1994 , SAARBRÜCKEN XP002255640 Seite 28

## Beschreibung

Die Erfindung betrifft einen keramischen Formkörper aus oxidkeramischem Basismaterial mit bei Beregnung oder Berieselung mit Wasser selbstreinigender Oberfläche sowie ein Verfahren zur Herstellung desselben.

Aus der EP 0 590 477 B1 ist ein Baumaterial bekannt, das beispielsweise ein Außenwandmaterial oder Dachmaterial sein kann, wobei auf der Oberfläche des Baumaterials ein dünner Metalloxidfilm mit photokatalytischer Wirkung aufgebracht ist. Der Metalloxidfilm wird bevorzugt mittels Sol-Gel-Verfahren aufgebracht. Bevorzugt wird unter Verwendung von Titandioxidsol ein Titandioxid-Dünnfilmbaumaterial hergestellt. Der aus der EP 0 590 477 B1 bekannte dünne Metalloxidfilm weist desodorierende Antischimmeleigenschaften auf.

Der aus der EP 0 590 477 B1 bekannte Metalloxidfilm weist aufgrund seiner filmartigen Struktur eine kleine Oberfläche und mithin eine niedrige katalytische Aktivität auf.
Aus der DE 199 11 738 A1 ist ein mit Fe³⁺-lonen dotierter Titandioxid-Photokatalysator bekannt, der einen zu den Fe³⁺-lonen äquimolaren oder annähernd äquimolaren Gehalt an fünfwertigen Ionen aufweist. Der aus der DE 199 11 738 A1 bekannte, mit Fe³⁺-Ionen dotierte Titandioxid-Photokatalysator wird über Sol-Gel-Verfahren hergestellt.

Aus der EP 0 909 747 A1 ist ein Verfahren zur Erzeugung einer Selbstreinigungseigenschaft von Oberflächen, insbesondere der Oberfläche von Dachziegeln, bei Beregnung oder Berieselung mit Wasser bekannt. Die Oberfläche weist hydrophobe Erhebungen mit einer Höhe von 5 bis 200 µm in verteilter Form auf. Zur Erzeugung dieser Erhebungen wird eine Oberfläche mit einer Dispersion von Pulverpartikeln aus inertem Material in einer Siloxan-Lösung benetzt und das Siloxan anschließend ausgehärtet. Das aus der EP 0 909 747 A1 bekannte Verfahren erlaubt die Herstellung eines keramischen Körpers, der eine Oberfläche aufweist, an der Schmutzpartikel schlecht haften können. Der aus der EP 0 909 747 A1 bekannte keramische Körper verfügt über keinerlei katalytische Aktivität.

Aus der WO 01/79141 A1 ist ein weiteres Verfahren zur Erzeugung einer Selbstreinigungseigenschaft einer Oberfläche sowie ein mit diesem Verfahren hergestellter Gegenstand bekannt. Gemäß diesem Verfahren wird auf eine Oberfläche mittels eines Sol-Gel-Verfahrens eine metallorganische Verbindung des Titanoxids aufgetragen, die Oberfläche getrocknet und anschließend bei höherer Temperatur getempert. Die Oberfläche der Titanoxidschicht kann nachfolgend hydrophobiert werden.

Aufgabe der Erfindung ist es, einen keramischen Formkörper, insbesondere Dachbaustoffe, bereitzustellen, der eine verbesserte Selbstreinigungskraft und eine und verbesserte Stabilität, wie beispielsweise verbesserte Abriebbeständigkeit, aufweist.

Eine weitere Aufgabe ist es, ein Verfahren zur Herstellung eines solchen verbesserten keramischen Formkörpers anzugeben.

Die der Erfindung zugrunde liegende Aufgabe wird durch einen keramischen Formkörper aus oxidkeramischem Basismaterial mit bei Beregnung oder Berieselung mit Wasser selbstreinigender Oberfläche, wobei der Formkörper ein Dachziegel, Ziegel, Klinker oder eine Fassadenwand ist und eine poröse oxidkeramische Beschichtung aufweist, wobei die Beschichtung photokatalytisch aktiv ist und TiO₂ enthält und eine spezifische Oberfläche in einem Bereich von 25 m²/g bis 200 m²/g, vorzugsweise von 40 m²/g bis 150 m²/g, aufweist, gelöst. Das TiO₂ ist durch Flammenhydrolyse von TiCl₄ als hochdisperses- TiO₂ erzeugt.

Bevorzugte Weiterbildungen des keramischen Formkörpers sind in den abhängigen Ansprüchen 2 bis 17 angegeben.

Die Aufgabe wird weiterhin gelöst durch ein Verfahren zur Herstellung eines solchen keramischen Formkörpers aus oxidkeramischem Basismaterial mit bei Beregnung oder Berieselung mit Wasser selbstreinigender Oberfläche, wobei der Formkörper eine photokatalytisch aktive, poröse oxidkeramische Beschichtung mit einer spezifischen Oberfläche in einem Bereich von 25 m²/g bis 200 m²/g, vorzugsweise 40 m²/g bis 150 m²/g, aufweist, wobei das Verfahren die folgenden Schritte umfasst:
(a) Mischen von photokatalytisch aktivem, oxidkeramischem Pulver, das TiO₂ enthält, wobei das TiO₂ durch Flammenhydrolyse von TiCl₄ als hochdisperses TiO₂ erzeugt ist, Stellmittel und/oder Haftmittel sowie einer Flüssigphase unter Bereitstellung einer Suspension,
(b) Aufbringen der in Schritt (a) hergestellten Suspension auf das oxidkeramische Basismaterial unter Ausbildung einer Schicht,
(c) Härten der in Schritt (b) bereitgestellten Schicht unter Ausbildung einer photokatalytisch aktiven, porösen oxidkeramischen Beschichtung.

Bevorzugte Weiterbildung dieses Verfahrens sind in den abhängigen Patentansprüche 19 bis 41 angegeben.

Weiterhin betrifft die Erfindung die Verwendung von durch Flammenhydrolyse von TiCl₄ erzeugtem hochdispersen TiO₂ in einer oxidkeramischen Beschichtung für Dachziegel, ziegel, klinker oder eine Fassadenwand.

Der gemäß den erfindungsgemäßen Verfahren hergestellte keramische Formkörper weist eine sehr geeignete Porosität und Stabilität auf.

Im Unterschied zu den im Stand der Technik bevorzugt verwendeten Sol-Gel-Verfahren zur Herstellung von Beschichtungen wird erfindungsgemäß eine Suspension von photokatalytisch aktivem, oxidkeramischem Pulver mit weiteren Komponenten auf einem oxidkeramischen Basismaterial aufgetragen. Es kommt mithin nicht zur Ausbildung eines Films, sondern zur Ausbildung einer porösen Struktur mit großer spezifischer Oberfläche.

Die ausgebildete Struktur ist eine hochporöse Struktur, d.h. die spezifische Oberfläche der katalytisch aktiven, porösen oxidkeramischen Beschichtung liegt in einem Bereich von 25 m²/g bis 200 m²/g, weiter bevorzugt in einem Bereich von 40 m²/g bis 150 m²/g. Weiter bevorzugt liegt die spezifische Oberfläche in einem Bereich von 40 m²/g bis 100 m²/g.

Mit einer spezifischen Oberfläche von etwa 50 m²/g wird eine sehr zufriedenstellende katalytische Aktivität der aufgebrachten oxidkeramischen Beschichtung erhalten. Dabei liegt die mittlere Schichtdicke der oxidkeramischen Beschichtung vorzugsweise in einem Bereich von etwa 50 nm bis etwa 50 µm, weiter bevorzugt von etwa 100 nm bis etwa 10 µm. Mit einer Schichtdicke von etwa 1 µm wird eine sehr zufriedenstellende katalytische Aktivität erhalten.

Mit der erfindungsgemäßen photokatalytisch aktiven, porösen oxidkeramischen Beschichtung werden auf dem keramischen Formkörper sich ablagernde(r) bzw. einlagernde(r) Schimmel, Pilzhyphen, Pflanzenwuchs, beispielsweise Moos, Algen etc., bakterielle Verunreinigungen, etc. photochemisch abgebaut und entfernt. Die photokatalytische Aktivität der porösen oxidkeramischen Beschichtung ist äußerst vorteilhaft bei Umgebungstemperatur ausreichend, um die genannten Stoffe bzw. Verunreinigungen zu oxidieren und somit abzubauen. Die oxidierten-Substanzen weisen ein vermindertes Haftungsvermögen auf und werden bei Beregnung bzw: Berieselung mit Wasser leicht von der Oberfläche des erfindungsgemäßen Formkörpers abgespült.

Es wird vermutet, dass die photokatalytisch aktive Beschichtung zum einen unmittelbar auf die organischen Verschmutzungsstoffe bzw. Verunreinigungen oxidativ einwirken kann. Zum anderen wird angenommen, dass die oxidative Wirkung der photokatalytisch aktiven Beschichtung mittelbar durch die Erzeugung von Sauerstoff-Radikalen erfolgt, die nachfolgend die Verschmutzungsstoffe bzw. Verunreinigungen oxidieren und mithin abbauen.

Die Selbstreinigungswirkung des erfindungsgemäßen keramischen Formkörpers kann weiter gesteigert werden, wenn unter der photokatalytisch aktiven, porösen oxidkeramischen Beschichtung eine Oberflächenstruktur mit Erhebungen bzw. Vertiefungen angeordnet ist und/oder wenn die photokatalytisch aktive, poröse oxidkeramische Beschichtung selbst eine Oberflächenstruktur mit Erhebungen und Vertiefungen aufweist.

Es hat sich gezeigt, dass keramische Oberflächenstrukturen mit Erhebungen, vorzugsweise mit einer vorgegebenen Verteilungsdichte, über eine überraschende Selbstreinigungseigenschaft verfügen. Die Erhebungen können weiterhin hydrophobiert sein, so dass die Anhaftung von hydrophilen Verschmutzungsstoffen bzw. Verunreinigungen weiter stark verringert wird.

Die Erhebungen können durch Aufbringung von partikulärem Material auf dem keramischen Basismaterial gebildet werden. Als partikuläres Material wird hierbei vorzugsweise temperaturbeständiges, gemahlenes Material verwendet, das vorzugsweise aus der Gruppe ausgewählt wird, die aus gemahlenem Gestein, Schamotte, Ton, Minerale, Keramikpulver wie SiC, Glas, Glasschamotte und Mischungen davon bestehen. Selbstverständlich kann als partikuläres Material auch TiO₂, Al₂O₃, SiO₂ und/oder Ce₂O₃ verwendet werden.

Dabei haben sich Partikel mit einer Größe in einem Bereich von bis zu 1500 nm, vorzugsweise von etwa 50 nm bis etwa 700 nm, als sehr geeignet erwiesen. Weiterhin ist ein Partikelgrößenbereich von etwa 50 nm bis etwa 200 nm sehr bevorzugt.

Bevorzugt ist, dass die Erhebungen bzw. Vertiefungen Höhen bzw. Tiefen in einem Bereich von bis zu 1500 nm, vorzugsweise von etwa 50 nm bis etwa 700 nm, weiter bevorzugt von etwa 50 nm bis etwa 200 nm, aufweisen. Somit können die Erhebungen auch unter Aggregation oder Agglomeration von kleineren Partikeln gebildet werden.

Das partikuläre Material kann hierbei unter Verwendung von Haftmitteln an dem keramischen Basismaterial fixiert werden. Beispielsweise können als Haftmittel Polysiloxane verwendet werden, die das partikuläre Material zum einen an der Oberfläche des oxidkeramischen Basismaterials fixieren und zum anderen die hergestellte Beschichtung mit einer superhydrophoben Oberfläche versehen. Das Haftmittel, beispielsweise das Polysiloxan, wird im Schritt (a) des erfindungsgemäßen Verfahren bei der Herstellung der Suspension zugesetzt.

Sofern die Hydrophobierung der Oberfläche der Beschichtung erhalten werden soll, darf in diesem Fall das Härten in Schritt (c) nicht bei einer Temperatur von mehr als 300°C erfolgen. Wird die Temperatur über 300°C erhöht, kann es zu einer thermischen Zersetzung des Polysiloxans und zum Abbau der superhydrophoben Oberfläche auf der photokatalytisch aktiven, porösen oxidkeramischen Beschichtung kommen.

Selbstverständlich können auch andere Haftmittel, vorzugsweise organischer Natur, wie beispielsweise Carboxymethylcellulosen verwendet werden.

Bei einem Brennen des keramischen Formkörpers, das üblicherweise in einem Bereich von mehr als 300°C bis etwa 1100°C durchgeführt wird, wird das zur Erzeugung von Erhebungen verwendete partikuläre Material mit einer Temperatur beaufschlagt, die zu einem oberflächlichen Erweichen der Partikeloberflächen führt, so dass sich eine sinterähnliche Verbindung zwischen dem partikulärem Material und dem oxidkeramischen Basismaterial ausbildet. Hierbei können beispielsweise auch die Sintertemperatur absenkende Flussmittel zugesetzt werden.

Dem Fachmann sind aus den EP 0 909 747, EP 00 115 701, EP 1 072 572 und EP 1 095 923 verschiedenartige Möglichkeiten zur Befestigung von partikulärem Material auf einer keramischen Oberfläche bekannt.

Vorzugsweise werden zur Bildung der photokatalytisch aktiven, porösen oxidkeramischen Beschichtung zusätzlich photokatalytisch aktive, oxidkeramische Materialien verwendet, die aus der Gruppe ausgewählt werden, die aus Al₂O₃, SiO₂, Ce₂O₃ und Mischungen davon besteht.

Gemäß einer weiteren bevorzugten Ausführungsform können die vorgenannten photokatalytisch aktiven, oxidkeramischen Materialien auch in dem oxidkeramischen Basiskörper enthalten sein.

Gemäß einer bevorzugten Ausführungsform umfasst das photokatalytisch aktive, oxidkeramische Material in der Beschichtung TiO₂ wahlweise in Kombination mit weiteren oxidkeramischen Materialien. Als sehr geeignet haben sich beispielsweise Mischungen aus Titandioxid und Siliziumdioxid, Titandioxid und Aluminiumdioxid, als auch aus Titandioxid, Aluminiumdioxid und Siliziumdioxid erwiesen.

Gemäß einer bevorzugten Ausführungsform umfasst des photokatalytisch aktive, oxidkeramische Material in dem oxidkeramischen Basiomaterial TiO₂ oder Al₂O₃, wahlweise in Kombination mit weiteren oxidkeramischen Materialien. Als sehr geeignet haben sich beispielweise Mischungen aus Titandioxid und Siliziumdioxid, Titandioxid und Aluminiumdioxid, Aluminiumdioxid und Siliziumdioxid als auch aus Titandioxid, Aluminiumdioxid und Siliziumdioxid erwisen.

Als Titandioxid wird hierbei vorzugsweise Titandioxid mit Anatas-Struktur verwendet. Als Aluminiumoxid wird bevorzugt Aluminiumoxid C verwendet, das kristallographisch der δ-Gruppe zuzuordnen ist und über eine starke oxidationskatalytische Wirkung verfügt.

Geeignetes Aluminiumoxid C ist bei der Degussa AG, Deutschland, erhältlich. Beispielsweise hat sich AEROSIL COK 84, eine Mischung von 84 % AEROSIL 200 und 16 % Aluminiumoxid C, als sehr verwendbar bei der vorliegenden Erfindung erwiesen.

Bei Verwendung von TiO₂ in der oxidkeramischen Beschichtung ist bevorzugt, dass das TiO₂ wenigstens teilweise in der Anatas-Struktur, vorzugsweise zu wenigstens 40 Gew.-%, bevorzugt zu wenigstens 70 Gew.-%, weiter bevorzugt zu wenigstens 80 Gew.-%, bezogen auf die Gesamtmenge an TiO₂, vorliegt.

Als sehr geeignet hat sich TiO₂ erwiesen, das in einer Mischung aus etwa 70 - 85 Gew.-% Anatas bzw. etwa 30 - 15 Gew.-% Rutil vorliegt.

Das bei der vorliegenden Erfindung verwendete TiO₂ wird durch Flammenhydrolyse von TiCl₄ als hochdisperses TiO₂ erhalten, welches vorzugsweise eine Partikelgröße von etwa 15 nm bis 30 nm, vorzugsweise 21 nm aufweist.

Beispielsweise kann hierfür das unter der Bezeichnung Titandioxid P 25 von der Degussa AG, Deutschland erhältliche Titandioxid verwendet werden, das aus einem Anteil von 70 % Anatasform und 30 % Rutil besteht. Äußerst vorteilhaft absorbiert Titandioxid in der Anatasform UV-Licht mit Wellenlängen von kleiner als 385 nm. Rutil absorbiert UV-Licht mit einer Wellenlänge von kleiner als 415 nm.

Gemäß ein bevorzugten Weiterbildung weist der erfindungsgemäße keramische Formkörper eine superhydrophobe Oberfläche auf.

Es hat sich gezeigt, daß die Selbstreinigungseigenschaft der Oberfläche deutlich verbessert werden kann, wenn die photokatalytisch aktive, poröse oxidkeramische Beschichtung mit einer superhydrophoben Oberfläche versehen wird. Die oxidierten organischen Verschmutzungsstoffe werden noch leichter durch Beregnung oder Berieselung mit Wasser von der Oberfläche heruntergespült.

Unter einer superhydrophoben Oberfläche wird im Sinne der Erfindung eine Oberfläche mit einem Randwinkel von wenigstens 140 ° für Wasser verstanden. Der Randwinkel kann an einem auf eine Oberfläche gegebenen Wassertropfen mit einem Volumen von 15 µl auf herkömmliche Art und Weise bestimmt werden.

Vorzugsweise beträgt der Randwinkel wenigstens 150°, weiter bevorzugt 160°, noch weiter bevorzugt wenigstens 170°.

Die photokatalytisch aktive, poröse oxidkeramische Beschichtung kann unter Verwendung von Ormoceren, Polysiloxan, Alkylsilan und/oder Fluorsilan hydrophobiert werden.

Vorzugsweise wird eine Mischung aus SiO₂ und Fluorsilan aufgebracht, wodurch eine superhydrophobe Oberfläche bereitgestellt wird. Diese Hydrophobierung bzw. Bereitstellung einer superhydrophoben Oberfläche ist äußerst vorteilhaft für die Selbstreinigungseigenschaft des erfindungsgemäßen Formkörpers.

Gemäß einer weiteren bevorzugten Ausführungsform weist die superhydrophobe Oberfläche Erhebungen auf. Diese Erhebungen können bei Aufbringung des Hydrophobierungsmittels erzeugt werden, indem dem Hydrophobierungsmittel partikuläres Material zugemischt wird und diese Mischung nachfolgend auf die photokatalytisch aktive, poröse oxidkeramische Beschichtung aufgebracht wird.

Wenn die Oberfläche mit den vorstehend angegebenen Hydrophobierungsmitteln hydrophobiert ist, darf die Temperatur nicht über 300°C erhöht werden, da es dann zu der bereits oben erwähnten thermischen Zersetzung der Hydrophobierungsmittel kommen kann.

Im Sinne der Erfindung erfolgt daher ein Härten durch Brennen nur dann, wenn noch keine superhydrophobe Oberfläche auf der photokatalytisch aktiven, porösen oxidkeramischen Beschichtung aufgebracht wurde. Wurde Polysiloxan als Haftmittel verwendet und nachfolgend der Formkörper durch Brennen gehärtet, muß regelmäßig die Oberfläche noch einmal hydrophobiert werden, wenn eine superhydrophobe Oberfläche auf der photokatalytisch aktiven, porösen oxidkeramischen Beschichtung bereitgestellt werden soll.

Vorzugsweise liegt der keramische Formkörper als Dachziegel, Ziegel, Klinker oder Fassadenwand vor.

Bei der Herstellung eines erfindungsgemäßen keramischen Formkörpers liegt das in Schritt (a) verwendete photokatalytisch aktive, oxidkeramische Pulver vorzugsweise in einer nanodispersen Form vor. Hierbei hat sich Partikelgrößenbereich des oxidkeramischen Pulvers in einem Bereich von 5 nm bis etwa 100 nm, weiter bevorzugt von etwa 10 nm bis etwa 50 nm, als sehr geeignet erwiesen.

Zur Herstellung des erfindungsgemäßen keramischen Formkörpers wird aus oxidkeramischem Pulver, Stellmittel und/oder Haftmittel sowie einer Flüssigphase unter Mischen eine bevorzugt homogene Suspension bereitgestellt. Diese Suspension kann in einer gewünschten Schichtdicke auf das oxidkeramische Basismaterial aufgebracht werden.

Die Suspension kann beispielsweise durch Gießen, Streichen, Sprühen, Schleudern, etc. auf das keramische Basismaterial aufgebracht werden. Selbstverständlich kann das oxidkeramische Basismaterial auch in die Suspension eingetaucht werden.

Vorzugsweise wird die Suspension in einer solchen Schichtdicke aufgebracht, dass nach dem Trocknen und/oder Brennen ein keramischer Formkörper mit einer photokatalytisch aktiven, porösen oxidkeramischen Beschichtung in einer Dicke von etwa 50 nm bis etwa 50 µm, vorzugsweise etwa 100 nm bis etwa 10 µm, erhalten wird. Die Schichtdicke der ungetrockneten Suspension liegt üblicherweise in einem Bereich von etwa 0,5 µm bis etwa 100 µm.

Bei dem oxidkeramischen Basismaterial kann es sich um einen Grünkörper (ungebranntes Keramikmaterial) oder um vorgebranntes oder gebranntes Keramikmaterial handeln.

Als Stellmittel werden vorzugsweise organische Viskositätsregler, beispielsweise Carboxymethylcellulose, verwendet. Diese Viskositätsregler verleihen der Suspension eine geeignete Viskosität, damit diese zuverlässig auf dem keramischen Basismaterial in der gewünschten Schichtdicke aufgebracht werden kann. Äußerst vorteilhaft verbrennt das organische Stellmittel, vorzugsweise die Carboxymethylcellulose, wenn das Härten der Schicht durch Brennen in einem Temperaturbereich von mehr als 300°C bis etwa 1100°C erfolgt. Durch das Verbrennen des organischen Stellmittels wird die Ausbildung einer porösen Struktur in der photokatalytisch aktiven, porösen oxidkeramischen Beschichtung begünstigt. Dabei verbrennt das organische Stellmittel vorzugsweise vollständig und vorzugsweise rückstandsfrei unter Ausbildung einer porösen Struktur.

Das Brennen der in Schritt (b) bereitgestellten Schicht kann zum einen durch Brennen des Formkörpers in einem Brennofen oder in einer Brennkammer bei einer Temperatur von mehr als 300°C bis etwa 1100°C erfolgen. Weiterhin erfolgt das Brennen vorzugsweise in einem Temperaturenbereich von etwa 700°C bis etwa 1100°C.

Das Trocknen erfolgt bei einer wesentlich tieferen Temperatur als das Brennen. Das Trocknen erfolgt üblicherweise in einem Temperaturbereich von 50°C bis 300°C, vorzugsweise von 80°C bis 100°C. In diesem Temperaturbereich wird eine aufgebrachte superhydrophobe Beschichtung nicht zerstört bzw. abgebaut.

Bei Verwendung von Haftmittel wird der Suspension vorzugsweise Polysiloxan zugesetzt, das die Haftung des oxidkeramischen Pulvers an dem oxidkeramischen Basismaterial unterstützt. Polysiloxan führt neben seiner Haftwirkung auch zu einer Hydrophobierung der Struktur. Darüber hinaus bewirkt das Zusetzen von Haftmittel, wie beispielsweise Polysiloxan, auch eine Erhöhung der Viskosität der in Schritt (a) des erfindungsgemäßen Verfahrens hergestellten Suspension. Somit muss bei einem Zusetzen von Haftmittel zu der Suspension in Schritt (a) nicht notwendigerweise ein Stellmittel zugegeben werden. Die unter Verwendung von Haftmittel eingestellte Viskosität kann ausreichen, so dass in Schritt (b) die Suspension auf dem keramischen Basismaterial unter Ausbildung einer Schicht aufgebracht werden kann.

Als Flüssigphase wird vorzugsweise Wasser verwendet.

Bei einer weiteren erfindungsgemäßen Ausgestaltung des Verfahrens kann der in Schritt (a) hergestellten Suspension auch partikuläres Material zugesetzt werden. Bei dieser Verfahrensvariante werden in einem Schritt die für den Selbstreinigungseffekt der Oberfläche vorteilhaften Erhebungen als auch die katalytisch aktive, poröse oxidkeramische Beschichtung ausgebildet.

Bei einem gemäß dieser Verfahrensvariante hergestellten keramischen Formkörper liegt dann kein getrennter Schichtaufbau aus Schicht mit Erhebungen und darüber angeordneter katalytisch aktiver, poröser oxidkeramischer Beschichtung vor. Vielmehr liegen die unter Verwendung von partikulärem Material hergestellten Erhebungen und die photokatalytisch aktiven oxidkeramischen Komponenten im wesentlichen nebeneinander bzw. miteinander innig vermischt vor.

Wahlweise kann dieser Suspension dann auch noch ein Hydrophobierungsmittel zugegeben werden, so dass die Superhydrophobierung der oxidkeramischen Oberfläche in dem gleichen Verfahrensschritt erfolgt. Bei dieser Verfahrensvariante darf das Härten dann nur durch Trocknen erfolgen, damit keine thermische Zersetzung der superhydrophoben Oberfläche eintritt.

Selbstverständlich ist es auch möglich, zunächst auf dem oxidkeramischen Basismaterial das oben genannte partikuläre Material zur Erzeugung von Erhebungen aufzubringen und mittels Haftmittel und/oder Sinterung an der Oberfläche des keramischen Basismaterials zu fixieren, diese so bereit gestellte, Erhebungen aufweisende Oberfläche unter Verwendung des erfindungsgemäßen Verfahrens mit einer photokatalytisch aktiven, porösen oxidkeramischen Beschichtung zu versehen und gegebenenfalls nachfolgend eine superhydrophobe Oberfläche auf der photokatalytisch aktiven Beschichtung zu erzeugen.

Als Hydrophobierungsmittel werden vorzugsweise anorganisch-organische Hybridmoleküle wie beispielsweise Siloxane, insbesondere Polysiloxane, verwendet. Weiterhin haben sich als Hydrophobierungsmittel, Ormocere, Alkylsilane und/oder Fluorsilane als geeignet erwiesen.

Die Hydrophobierungsmittel können durch ein geeignetes Verfahren, beispielsweise Sprühen, Gießen, Schleudern, Bestreuen etc. aufgebracht werden. Beispielsweise kann unter Verwendung einer, bevorzugt wässrigen, Flüssigphase zunächst eine Hydrophobierungslösung oder -suspension hergestellt werden. Dieser Hydrophobierungslösung oder -suspension können wahlweise noch partikuläre Materialien zugesetzt werden, wenn in der superhydrophoben Oberfläche Erhebungen erzeugt werden sollen. Diese Hydrophobierungslösung oder -suspension kann dann auf die oben beschriebene herkömmliche Art und Weise aufgebracht werden.

Unter einer superhydrophoben Oberfläche wird im Sinne der Erfindung eine superhydrophobe Schicht verstanden, wobei der Randwinkel für Wasser wenigstens 140°, vorzugsweise 160°, weiter bevorzugt 170°, beträgt.

Weiterhin kann nach Aufbringung der in Schritt (a) hergestellten Suspension auf das oxidkeramische Basismaterial vor dem Brennen auch ein Vortrocknungsschritt durchgeführt werden. Bei diesem Vortrocknungsschritt kann die Flüssigphase, vorzugsweise Wasser, durch Verflüchtigung entfernt werden. Dies kann beispielsweise durch Erwärmung, beispielsweise in einem Umluftofen oder Strahlungsofen erfolgen. Selbstverständlich können auch andere Trocknungsverfahren, beispielsweise Mikrowellentechnik, verwendet werden.

Der Vortrocknungsschritt hat sich als vorteilhaft erwiesen, um eine Rißbildung bzw. ein Reißen der aus der Suspension entstehenden Beschichtung beim Brennen zu vermeiden.

Nach dem Brennen kann dann eine superhydrophobe Oberfläche auf die vorstehend beschriebene Art und Weise aufgebracht werden.

Nach dem Brennschritt und der gegebenenfalls durchgeführten Hydrophobierung kann bei einer bevorzugten Ausführungsform eine Nachbehandlung der hergestellten photokatalytisch aktiven, porösen oxidkeramischen Beschichtung durchgeführt werden. Die Nachbehandlung erfolgt durch Einstrahlung von Laserlicht, NIR- oder UV-Licht. Durch diese Nachbehandlung kann die Haftung zwischen der photokatalytisch aktiven Beschichtung und dem oxidkeramischen Basismaterial verbessert werden.

Es hat sich gezeigt, dass der erfindungsgemäße keramische Formkörper neben einer verbesserten Selbstreinigungseigenschaft eine verbesserte mechanische Stabilität besitzt. Äußerst vorteilhaft haftet die katalytisch aktive, poröse oxidkeramische Beschichtung mit gegebenenfalls superhydrophober Oberfläche sehr fest und zuverlässig an dem keramischen Basismaterial. Somit wird diese Beschichtung, wenn sie beispielsweise auf Dachziegeln aufgebracht ist, nicht bei einem Begehen des Daches abgerieben oder zerstört.

## Patentansprüche

1. Keramischer Formkörper, nämlich Dachziegel, Ziegel, Klinker oder Fassadenwand, aus oxidkeramischem Basismaterial mit bei Beregnung oder Berieselung mit Wasser selbstreinigender Oberfläche,
**dadurch gekennzeichnet,**
**dass** der Formkörper eine poröse oxidkeramische Beschichtung aufweist, wobei die Beschichtung photokatalytisch aktiv ist und TiO₂ enthält und eine spezifische Oberfläche in einem Bereich von 25 m²/g bis 200 m²/g, vorzugsweise von 40 m²/g bis 150 m²/g, aufweist, wobei das TiO₂ durch Flammenhydrolyse von TiCl₄ als hochdisperses TiO₂ erzeugt ist.

2. Keramischer Formkörper nach Anspruch 1,
**dadurch gekennzeichnet,**
**dass** die Beschichtung eine spezifische Oberfläche in einem Bereich von 40 m²/g bis 100 m²/g aufweist.

3. Keramischer Formkörper nach einem der vorhergehenden Ansprüche,
**dadurch gekennzeichnet,**
**dass** die mittlere Schichtdicke der Beschichtung in einem Bereich von 50 nm bis etwa 50 µm, vorzugsweise von 100 nm bis 10 µm, liegt.

4. Keramischer Formkörper nach einem der vorhergehenden Ansprüche,
**dadurch gekennzeichnet,**
**dass** zwischen oxidkeramischem Basismaterial und photokatalytisch aktiver, poröser oxidkeramischer Beschichtung wenigstens eine Schicht mit Erhebungen angeordnet ist, das oxidkeramische Basismaterial Erhebungen aufweist und/oder die photokatalytisch aktive, poröse oxidkeramische Beschichtung als Schicht mit Erhebungen ausgebildet ist.

5. Keramischer Formkörper nach Anspruch 4,
**dadurch gekennzeichnet,**
**dass** die Erhebungen durch an dem oxidkeramischen Basismaterial fixiertes partikuläres Material gebildet sind.

6. Keramischer Formkörper nach Anspruch 5,
**dadurch gekennzeichnet,**
**dass** das partikuläre Material temperaturbeständiges gemahlenes Material ist, das vorzugsweise aus der Gruppe ausgewählt wird, die aus gemahlenem Gestein, Schamotte, Ton, Minerale, Keramikpulver wie SiC, Glas, Glasschamotte und Mischungen davon besteht.

7. Keramischer Formkörper nach Anspruch 5 oder 6,
**dadurch gekennzeichnet,**
**dass** die Größe der Partikel und/oder der Erhebungen in einem Bereich von bis zu 1500 nm, vorzugsweise von 50 nm bis 700 nm, weiter vorzugsweise von 50 nm bis 200 nm, liegt bzw. liegen.

8. Keramischer Formkörper nach einem der vorhergehenden Ansprüche,
**dadurch gekennzeichnet,**
**dass** die photokatalytisch aktive, poröse oxidkeramische Beschichtung zusätzlich photokatalytisch aktive, oxidkeramische Materialien umfasst, die aus der Gruppe ausgewählt werden, die aus Al₂O₃, SiO₂, und Mischungen davon besteht.

9. Keramischer Formkörper nach einem der vorhergehenden Ansprüche,
**dadurch gekennzeichnet,**
**dass** das oxidkeramische Basismaterial des Formkörpers photokatalytisch aktive, oxidkeramische Materialien enthält, die aus der Gruppe ausgewählt werden, die aus TiO₂, Al₂O₃, SiO₂, und Mischungen davon besteht.

10. Keramischer Formkörper nach einem der vorhergehenden Ansprüche,
**dadurch gekennzeichnet,**
**dass** das photokatalytisch aktive, oxidkeramische Material eine durchschnittliche Partikelgröße im Bereich von 5 nm bis 100 nm, vorzugsweise von 10 nm bis 50 nm, aufweist.

11. Keramischer Formkörper nach einem der vorhergehenden Ansprüche,
**dadurch gekennzeichnet,**
**dass** das in der photokatalytisch aktiven, porösen oxidkeramischen Beschichtung und/oder in dem oxidkeramischen Basismaterial enthaltene TiO₂ wenigstens teilweise, vorzugsweise zu wenigstens 40 Gew.-%, bezogen auf die Gesamtmenge an TiO₂, in der Anatas-Struktur vorliegt.

12. Keramischer Formkörper nach einem der vorhergehenden Ansprüche,
**dadurch gekennzeichnet,**
**dass** das in der photokatalytisch aktiven, porösen oxidkeramischen Beschichtung und/oder in dem oxidkeramischen Basismaterial enthaltene TiO₂ zu wenigstens 70 Gew.-%, bezogen auf die Gesamtmenge an TiO₂, in der Anatas-Struktur vorliegt.

13. Keramischer Formkörper nach einem der vorhergehenden Ansprüche,
**dadurch gekennzeichnet,**
**dass** das TiO₂ in einer Mischung aus 70 Gew.-% Anatas und 30 Gew.-% Rutil vorliegt.

14. Keramischer Formkörper nach einem der vorhergehenden Ansprüche,
**dadurch gekennzeichnet,**
**dass** die Beschichtung eine superhydrophobe Oberfläche aufweist, wobei die superhydrophobe Oberfläche einen Kontakt- oder Randwinkel von wenigstens 140 ° für Wasser aufweist.

15. Keramischer Formkörper nach Anspruch 14,
**dadurch gekennzeichnet,**
**dass** die superhydrophobe Oberfläche der Beschichtung unter Verwendung von Ormoceren, Polysiloxan, Alkylsilan und/oder Fluorsilan, vorzugsweise in Kombination mit SiO₂, bereitgestellt ist.

16. Keramischer Formkörper nach einem der Ansprüche 14 oder 15,
**dadurch gekennzeichnet,**
**dass** die superhydrophobe Oberfläche der Beschichtung Erhebungen aufweist.

17. Keramischer Formkörper nach Anspruch 16,
**dadurch gekennzeichnet,**
**dass** die Erhebungen der superhydrophoben Oberfläche unter Verwendung von partikulärem Material erzeugt sind.

18. Verfahren zur Herstellung eines keramischen Formkörpers, nämlich Dachziegel, Ziegel, Klinker oder Fassadenwand, aus oxidkeramischem Basismaterial mit bei Beregnung oder Berieselung mit Wasser selbstreinigender Oberfläche, wobei der Formkörper eine photokatalytisch aktive, poröse oxidkeramische, TiO₂ enthaltende Beschichtung mit einer spezifischen Oberfläche in einem Bereich von 25 m²/g bis 200 m²/g, vorzugsweise 40 m²/g bis 150 m²/g, aufweist, wobei das Verfahren die folgenden Schritte umfasst:
(a) Mischen von photokatalytisch aktivem, oxidkeramischem Pulver, das TiO₂ enthält, wobei das TiO₂ durch Flammenhydrolyse von TiCl₄ als hochdisperses TiO₂ erzeugt ist, Stellmittel und/oder Haftmittel sowie einer Flüssigphase unter Bereitstellung einer Suspension,
(b) Aufbringen der in Schritt (a) hergestellten Suspension auf das oxidkeramische Basismaterial unter Ausbildung einer Schicht,
(c) Härten der in Schritt (b) bereitgestellten Schicht unter Ausbildung einer photokatalytisch aktiven, porösen oxidkeramischen Beschichtung.

19. Verfahren nach Anspruch 18,
**dadurch gekennzeichnet,**
**dass** auf das oxidkeramische Basismaterial in einem vorgelagerten Schritt wenigstens eine Schicht mit Erhebungen aufgebracht wird und dass die in Schritt (a) hergestellte Suspension auf das mit einer Schicht mit Erhebungen versehene oxidkeramische Basismaterial aufgebracht und nachfolgend im Schritt (c) gehärtet wird.

20. Verfahren nach Anspruch 18,
**dadurch gekennzeichnet,**
**dass** im Schritt (a) zusätzlich partikuläres Material zugemischt wird.

21. Verfahren nach Anspruch 18 oder 19,
**dadurch gekennzeichnet,**
**dass** die Erhebungen durch Fixieren von partikulärem Material auf dem oxidkeramischen Basismaterial gebildet werden.

22. Verfahren nach Anspruch 20 oder 21,
**dadurch gekennzeichnet,**
**dass** das partikuläre Material temperaturbeständiges gemahlenes Material ist, das vorzugsweise aus der Gruppe ausgewählt wird, die aus gemahlenem Gestein, Schamotte, Ton, Minerale, Keramikpulver wie SiC, Glas, Glasschamotte und Mischungen davon besteht.

23. Verfahren nach einem der Ansprüche 20 bis 22,
**dadurch gekennzeichnet,**
**dass** die mittlere Partikelgröße des partikulären Materials in einem Bereich bis zu 1500 nm, vorzugsweise von 50 nm bis 700 nm, weiter vorzugsweise von 50 nm bis 200 nm, liegt.

24. Verfahren nach einem der Ansprüche 18 bis 23,
**dadurch gekennzeichnet,**
**dass** in Schritt (a) verwendetes Stellmittel ein organischer Viskositätsregler ist.

25. Verfahren nach Anspruch 24,
**dadurch gekennzeichnet,**
**dass** als organischer Viskositätsregler Carboxymethylcellulose verwendet wird.

26. Verfahren nach einem der Ansprüche 18 bis 25,
**dadurch gekennzeichnet,**
**dass** in Schritt (a) verwendetes Haftmittel Polysiloxan ist.

27. Verfahren nach einem der Ansprüche 18 bis 26,
**dadurch gekennzeichnet,**
**dass** in Schritt (a) als Flüssigphase Wasser verwendet wird.

28. Verfahren nach einem der Ansprüche 18 bis 27,
**dadurch gekennzeichnet,**
**dass** die Haftung zwischen photokatalytisch aktiver Beschichtung und oxidkeramischem Basismaterial verbessert wird, indem die in Schritt (c) hergestellte photokatalytisch aktive, poröse oxidkeramische Beschichtung mit Laserticht, NIR- oder UV-Licht bestrahlt wird.

29. Verfahren nach einem der Ansprüche 18 bis 28,
**dadurch gekennzeichnet,**
**dass** das in Schritt (a) verwendete photokatalytisch aktive, oxidkeramische Pulver zusätzlich Materialien umfasst, die aus der Gruppe ausgewählt werden, die aus Al₂O₃, SiO₂, und Mischungen davon besteht.

30. Verfahren nach einem der Ansprüche 18 bis 29,
**dadurch gekennzeichnet,**
**dass** in dem oxidkeramischen Basismaterial des Formkörpers photokatalytisch aktive, oxidkeramische Materialien enthalten sind, die aus der Gruppe ausgewählt wurden, die aus TiO₂, Al₂O₃, SiO₂, und Mischungen davon besteht.

31. Verfahren nach einem der Ansprüche 18 bis 29,
**dadurch gekennzeichnet,**
**dass** das in Schritt (a) verwendete photokatalytisch aktive, oxidkeramische Pulver Partikel im Bereich von 5 nm bis 100 nm, vorzugsweise von 10 nm bis 50 nm, umfasst.

32. Verfahren nach einem der Ansprüche 18 bis 31,
**dadurch gekennzeichnet,**
**dass** das in dem photokatalytisch aktiven, oxidkeramischen Pulver und/oder in dem oxidkeramischen Basismaterial enthaltene TiO₂ wenigstens teilweise, vorzugsweise zu wenigstens 40 Gew.-%, bezogen auf die Gesamtmenge an TiO₂, in der Anatas-Struktur vorliegt.

33. Verfahren nach einem der Ansprüche 18 bis 32,
**dadurch gekennzeichnet,**
**dass** das in dem photokatalytisch aktiven, oxidkeramischen Pulver und/oder in dem oxidkeramischen Basismaterial enthaltene TiO₂ zu wenigstens 70 Gew.-%, bezogen auf die Gesamtmenge an TiO₂, in der Anatas-Struktur vorliegt.

34. Verfahren nach einem der Ansprüche 18 bis 33,
**dadurch gekennzeichnet,**
**dass** das in dem photokatalytisch aktiven, oxidkeramischen Pulver und/oder in dem oxidkeramischen Basismaterial enthaltene TiO₂ in einer Mischung aus 70 Gew.-% Anatas und 30 Gew.-% Rutil vorliegt.

35. Verfahren nach einem der Ansprüche 18 bis 34,
**dadurch gekennzeichnet,**
**dass** die in Schritt (b) bereitgestellte Schicht in Schritt (c) durch Trocknen bei einer Temperatur von bis zu 300°C und/oder durch Brennen bei einer Temperatur von mehr als 300°C bis 1100°C gehärtet wird.

36. Verfahren nach Anspruch 35,
**dadurch gekennzeichnet,**
**dass** die in Schritt (b) bereitgestellte Schicht vor dem Brennen in Schritt (c) durch Verflüchtigung der Flüssigphase wenigstens teilweise vorgetrocknet wird.

37. Verfahren nach einem der Ansprüche 18 bis 36,
**dadurch gekennzeichnet,**
**dass** die in Schritt (c) gehärtete Beschichtung unter Bereitstellung einer superhydrophoben Oberfläche hydrophobiert wird, wobei die superhydrophobe Oberfläche einen Kontakt- oder Randwinkel von wenigstens 140 ° für Wasser aufweist.

38. Verfahren nach einem der Ansprüche 18 bis 34,
**dadurch gekennzeichnet,**
**dass** im Schritt (a) zusätzlich ein Hydrophobierungsmittel zugegeben wird und die in Schritt (b) bereitgestellte Beschichtung im Schritt (c) durch Trocknen bei einer Temperatur bis zu 300°C gehärtet wird.

39. Verfahren nach Anspruch 37 oder 38,
**dadurch gekennzeichnet,**
**dass** zur Hydrophobierung ein anorganisch-organisches Hybridmolekül, vorzugsweise eine Polysiloxanlösung, verwendet wird.

40. Verfahren nach Anspruch 37 oder 38,
**dadurch gekennzeichnet,**
**dass** zur Hydrophobierung Ormocere, Alkylsilan und/oder Fluorsilan, vorzugsweise in Mischung mit SiO₂, verwendet wird.

41. Verfahren nach einem der Ansprüche 37 bis 40,
**dadurch gekennzeichnet,**
**dass** zur Erzeugung einer superhydrophoben Oberfläche mit Erhebungen bei der Hydrophobierung partikuläres Material zugesetzt wird.

42. Verwendung von durch Flammenhydrolyse von TiCl₄ erzeugtem hochdispersen TiO₂ in einer oxidkeramischen Beschichtung für Dachziegel, Ziegel, Klinker oder eine Fassadenwand.

## Claims

1. Shaped ceramic body, namely a roofing tile, brick, clinker or exterior wall, composed of oxide-ceramic base material and having a surface which is self-cleaning when water rains onto it or is sprayed onto it, **characterized in that** the shaped body has a porous oxide-ceramic coating which is photocatalytically active and comprises TiO₂ and has a specific surface area in the range from 25 m²/g to 200 m²/g, preferably from 40 m²/g to 150 m²/g, with the TiO₂ having been produced as finely divided TiO₂ by flame hydrolysis of TiCl₄.

2. Shaped ceramic body according to Claim 1, **characterized in that** the coating has a specific surface area in the range from 40 m²/g to 100 m²/g.

3. Shaped ceramic body according to either of the preceding claims, **characterized in that** the mean thickness of the coating is in the range from 50 nm to about 50 µm, preferably from 100 nm to 10 µm.

4. Shaped ceramic body according to any of the preceding claims, **characterized in that** at least one layer having raised regions is located between the oxide-ceramic base material and the photocatalytically active, porous oxide-ceramic coating, the oxide-ceramic base material has raised regions and/or the photocatalytically active, porous oxide-ceramic coating is configured as a layer having raised regions.

5. Shaped ceramic body according to Claim 4, **characterized in that** the raised regions are formed by particulate material fixed on the oxide-ceramic base material.

6. Shaped ceramic body according to Claim 5, **characterized in that** the particulate material is heat-resistant ground material which is preferably selected from the group consisting of milled rock, chamotte, clay, minerals, ceramic powder such as SiC, glass, glass chamotte and mixtures thereof.

7. Shaped ceramic body according to Claim 5 or 6, **characterized in that** the size of the particles and/or the raised regions is/are in the range up to 1500 nm, preferably from 50 nm to 700 nm, more preferably from 50 nm to 200 nm.

8. Shaped ceramic body according to any of the preceding claims, **characterized in that** the photocatalytically active, porous oxide-ceramic coating further comprises photocatalytically active, oxide-ceramic materials selected from the group consisting of Al₂O₃, SiO₂ and mixtures thereof.

9. Shaped ceramic body according to any of the preceding claims, **characterized in that** the oxide-ceramic base material of the shaped body comprises photocatalytically active, oxide-ceramic materials selected from the group consisting of TiO₂, Al₂O₃, SiO₂ and mixtures thereof.

10. Shaped ceramic body according to any of the preceding claims, **characterized in that** the photocatalytically active, oxide-ceramic material has an average particle size in the range from 5 nm to 100 nm, preferably from 10 nm to 50 nm.

11. Shaped ceramic body according to any of the preceding claims, **characterized in that** the TiO₂ present in the photocatalytically active, porous oxide-ceramic coating and/or in the oxide-ceramic base material is at least partly, preferably to an extent of at least 40% by weight, based on the total amount of TiO₂, present in the anatase form.

12. Shaped ceramic body according to any of the preceding claims, **characterized in that** at least 70% by weight, based on the total amount of TiO₂, of the TiO₂ present in the photocatalytically active, porous oxide-ceramic coating and/or in the oxide-ceramic base material is present in the anatase form.

13. Shaped ceramic body according to any of the preceding claims, **characterized in that** the TiO₂ is in the form of a mixture of 70% by weight of anatase and 30% by weight of rutile.

14. Shaped ceramic body according to any of the preceding claims, **characterized in that** the coating has a superhydrophobic surface having a contact or wetting angle of at least 140° for water.

15. Shaped ceramic body according to Claim 14, **characterized in that** the superhydrophobic surface of the coating has been obtained using Ormocers, polysiloxane, alkylsilane and/or fluorosilane, preferably in combination with SiO₂.

16. Shaped ceramic body according to either Claim 14 or 15, **characterized in that** the superhydrophobic surface of the coating has raised regions.

17. Shaped ceramic body according to Claim 16, **characterized in that** the raised regions of the superhydrophobic surface have been produced using particulate materials.

18. Process for producing a shaped ceramic body, namely a roofing tile, brick, clinker or exterior wall, which is composed of an oxide-ceramic base material and has a surface which is self-cleaning when water rains onto it or is sprayed onto it, with the shaped body having a photocatalytically active, porous oxide-ceramic, TiO₂-containing coating having a specific surface area in the range from 25 m²/g to 200 m²/g, preferably from 40 m²/g to 150 m²/g, wherein the process comprises the following steps:
(a) mixing of a photocatalytically active, oxide-ceramic powder comprising TiO₂ which has been produced as finely divided TiO₂ by flame hydrolysis of TiCl₄, auxiliaries and/or bonding agents and also a liquid phase to give a suspension,
(b) application of the suspension prepared in step (a) to the oxide-ceramic base material to form a layer,
(c) curing of the layer produced in step (b) to form a photocatalytically active, porous oxide-ceramic coating.

19. Process according to Claim 18, **characterized in that** at least one layer having raised regions is applied to the oxide-ceramic base material in a preceding step and **in that** the suspension prepared in step (a) is applied to the oxide-ceramic base material provided with a layer having raised regions and is subsequently cured in step (c).

20. Process according to Claim 18, **characterized in that** particulate material is additionally mixed in in step (a).

21. Process according to Claim 18 or 19, **characterized in that** the elevations are formed by fixing particulate material on the oxide-ceramic base material.

22. Process according to Claim 20 or 21, **characterized in that** the particulate material is heat-resistant ground material which is preferably selected from the group consisting of milled rock, chamotte, clay, minerals, ceramic powder such as SiC, glass, glass chamotte and mixtures thereof.

23. Process according to any of Claims 20 to 22, **characterized in that** the mean particle size of the particulate material is in the range up to 1500 nm, preferably from 50 nm to 700 nm, more preferably from 50 nm to 200 nm.

24. Process according to any of Claims 18 to 23, **characterized in that** the auxiliary used in step (a) is an organic viscosity regulator.

25. Process according to Claim 24, **characterized in that** the organic viscosity regulator used is carboxymethylcellulose.

26. Process according to any of Claims 18 to 25, **characterized in that** the bonding agent used in step (a) is polysiloxane.

27. Process according to any of Claims 18 to 26, **characterized in that** the liquid phase used in step (a) is water.

28. Process according to any of Claims 18 to 27, **characterized in that** the adhesion between the photocatalytically active coating and the oxide-ceramic base material is improved by irradiating the photocatalytically active, porous oxide-ceramic coating produced in step (c) with laser light, NIR radiation or UV light.

29. Process according to any of Claims 18 to 28, **characterized in that** the photocatalytically active, oxide-ceramic powder used in step (a) further comprises materials selected from the group consisting of Al₂O₃, SiO₂ and mixtures thereof.

30. Process according to any of Claims 18 to 29, **characterized in that** photocatalytically active, oxide-ceramic materials selected from the group consisting of TiO₂, Al₂O₃, SiO₂ and mixtures thereof are present in the oxide-ceramic base material of the shaped body.

31. Process according to any of Claims 18 to 29, **characterized in that** the photocatalytically active, oxide-ceramic powder used in step (a) comprises particles in the range from 5 nm to 100 nm, preferably from 10 nm to 50 nm.

32. Process according to any of Claims 18 to 31, **characterized in that** the TiO₂ present in the photocatalytically active, oxide-ceramic powder and/or in the oxide-ceramic base material is at least partly, preferably to an extent of at least 40% by weight, based on the total amount of TiO₂, present in the anatase form.

33. Process according to any of Claims 18 to 32, **characterized in that** at least 70% by weight, based on the total amount of TiO₂, of the TiO₂ present in the photocatalytically active, oxide-ceramic powder and/or in the oxide-ceramic base material is present in the anatase form.

34. Process according to any of Claims 18 to 33, **characterized in that** the TiO₂ present in the photocatalytically active, oxide-ceramic powder and/or in the oxide-ceramic base material is in the form of a mixture of 70% by weight of anatase and 30% by weight of rutile.

35. Process according to any of Claims 18 to 34, **characterized in that** the layer produced in step (b) is cured by drying at a temperature of up to 300°C and/or by firing at a temperature of from > 300°C to 1100°C in step (c).

36. Process according to Claim 35, **characterized in that** the layer produced in step (b) is at least partially predried by vaporization of the liquid phase prior to firing in step (c).

37. Process according to any of Claims 18 to 36, **characterized in that** the coating which has been cured in step (c) is hydrophobicized to give a superhydrophobic surface having a contact or wetting angle of at least 140° for water.

38. Process according to any of Claims 18 to 34, **characterized in that** a hydrophobicizing agent is additionally added in step (a) and the coating produced in step (b) is cured by drying at a temperature of up to 300°C in step (c).

39. Process according to Claim 37 or 38, **characterized in that** an inorganic-organic hybrid molecule, preferably a polysiloxane solution, is used for hydrophobicization.

40. Process according to Claim 37 or 38, **characterized in that** Ormocers, alkylsilane and/or fluorosilane, preferably in admixture with SiO₂, is used for hydrophobicization.

41. Process according to any of Claims 37 to 40, **characterized in that** particulate material is added in the hydrophobicization to produce a superhydrophobic surface having raised regions.

42. Use of finely divided TiO₂ produced by flame hydrolysis of TiCl₄ in an oxide-ceramic coating for roofing tiles, bricks, clinker or an exterior wall.

## Revendications

1. Corps moulé en céramique, à savoir, tuiles de toit, briques, briques vernissées ou parois de façades, du type composé d'un matériau de base en céramique oxydée; et d'une surface auto-nettoyante vis-à-vis des eaux de pluie ou de ruissellement, **caractérisé en ce que** le corps moulé présente un revêtement poreux de céramique oxydée, le revêtement présentant une activité photo-catalytique et contenant du TiO₂ et présentant une surface spécifique de l'ordre de 25 m²/g à 200 m²/g, de préférence de 40 m²/g à 150 m²/g, le TiO₂ étant obtenu par hydrolyse à la flamme de TiCl₄, sous forme de TiO₂ à haute dispersion.

2. Corps moulé en céramique selon la revendication 1, **caractérisé en ce que** le revêtement présente une surface spécifique de l'ordre de 40 m²/g à 100 m²/g.

3. Corps moulé en céramique selon l'une ou l'autre des revendications précédentes, **caractérisé en ce que** l'épaisseur moyenne de couche du revêtement est de l'ordre de 50 nm à environ 50 µm, et de préférence de 100 nm à 10 µm.

4. Corps moulé en céramique selon l'une quelconque des revendications précédentes, **caractérisé en ce que**, entre le matériau de base en céramique oxydée et le revêtement poreux en céramique oxydée à activité photo-catalytique est disposée au moins une couche présentant des reliefs, le matériau de base en céramique oxydée présente des reliefs et/ou le revêtement poreux en céramique oxydée à activité photo-catalytique consiste en une couche présentant des reliefs.

5. Corps en céramique oxydée selon la revendication 4, **caractérisé en ce que** les reliefs sont constitués par une matière particulaire fixée au matériau de base.

6. Corps moulé en céramique selon la revendication 5, **caractérisé en ce que** la matière particulaire est une matière moulue résistante à la température, choisie de préférence dans Le groupe constitué par la pierraille broyée, la chamotte, l'argile, les minéraux, la poudre de céramique comme le SiC, le verre, la chamotte de verre et leurs mélanges.

7. Corps moulé en céramique selon l'une ou l'autre des revendications 5 ou 6, **caractérisé en ce que** les dimensions des particules et/ou des reliefs vont jusqu'à 1500 nm, et sont de préférence de l'ordre de 50 nm à 700 nm, et plus préférentiellement de 50 nm à 200 nm.

8. Corps moulé en céramique selon l'une quelconque des revendications précédentes, **caractérisé en ce que** le revêtement poreux de céramique oxydée à activité photo-catalytique contient additionnellement des matières céramiques oxydées à activité photo-catalytique, qui sont choisies dans le groupe constitué par Al₂O₃, SiO₂ et leurs mélanges.

9. Corps moulé en céramique selon l'une quelconque des revendications précédentes, **caractérisé en ce que** le matériau de base en céramique oxydée du corps moulé contient des matières céramiques oxydées à activité photo-catalytique choisies dans le groupe constitué par TiO₂, Al₂O₃, SiO₂ et leurs mélanges.

10. Corps moulé en céramique selon l'une quelconque des revendications précédentes, **caractérisé en ce que** la matière céramique oxydée à activité photo-catalytique présente une grandeur moyenne de particules de l'ordre de 5 nm à 100 nm, et de préférence de 10 nm à 50 nm.

11. Corps moulé en céramique selon l'une quelconque des revendications précédentes, **caractérisé en ce que** le TiO₂ contenu dans le revêtement poreux de céramique oxydée à activité photo-catalytique et/ou dans le matériau de base en céramique oxydée est présent, au moins en partie, et de préférence jusqu'à au moins 40% du poids total de TiO₂ sous la forme à structure anatase.

12. Corps moulé en céramique selon l'une quelconque des revendications précédentes, **caractérisé en ce que** le TiO₂ contenu dans le revêtement poreux à activité photo-catalytique et/ou dans le matériau de base en céramique oxydée est présent jusqu'à au moins 70% du poids total de TiO₂ sous la forme à structure anatase.

13. Corps moulé en céramique selon l'une quelconque des revendications précédentes, **caractérisé en ce que** le TiO₂ est présent sous forme d'un mélange de 70% en poids d'anatase et de 30°% en poids de rutile.

14. Corps moulé en céramique selon l'une quelconque des revendications précédentes, **caractérisé en ce que** le revêtement présente une surface super-hydrophobe, ce revêtement superhydrophobe présentant un angle de contact ou angle périphérique d'au moins 140° pour l'eau.

15. Corps moulé en céramique selon la revendication 14, **caractérisé en ce que** la surface superhydrophobe du revêtement est mise en place en utilisant des ormocérènes, des polysiloxanes, des alkylsilanes et/ou des fluorosilanes, de préférence en combinaison avec de la SiO₂.

16. Corps moulé en céramique selon l'une ou l'autre des revendications 14 ou 15, **caractérisé en ce que** la surface superhydrophobe du revêtement présente des reliefs.

17. Corps moulé en céramique selon la revendication 16, **caractérisé en ce que** les reliefs de la surface superhydrophobe sont obtenus en utilisant des matières particulaires.

18. Procédé pour la fabrication d'un corps moulé en céramique, à savoir des tuiles de toit, des briques, des briques vernissées ou des parois de façades, composé d'un matériau de base en céramique oxydée, avec une surface auto-nettoyante vis-à-vis des eaux de pluie ou de ruissellement, le corps moulé présentant un revêtement poreux en céramique oxydée, contenant du TiO₂ et présentant une activité photo-catalytique, avec une surface spécifique de l'ordre de 25 m²/g à 200 m²/g, de préférence de 40 m²/g à 150 m²/g, ce procédé comportant les étapes suivantes :
a) mélangeage d'une poudre de céramique oxydée à activité photo-catalytique et contenant du TiO₂, le TiO₂ ayant été obtenu sous forme de TiO₂ à haute dispersion, par hydrolyse à la flamme de TiCl₄, d'un agent initiateur et/ou d'un agent d'adhérence, ainsi que d'une phase liquide jusqu'à obtention d'une suspension,
b) dépôt de la suspension obtenue à l'étape a) sur le matériau de base en céramique oxydée, pour en obtenir une couche,
c) durcissement de la couche obtenue à l'étape b) pour en obtenir un revêtement poreux en céramique oxydée à activité photo-catalytique.

19. Procédé selon la revendication 18, **caractérisé en ce que**, sur le matériau de base en céramique oxydée, dans une étape antérieure, est déposée une couche présentant des reliefs, et **en ce que** la suspension préparée à l'étape a) est déposée sur le matériau de base en céramique oxydée muni de la couche présentant des reliefs, et ensuite durcie à l'étape c).

20. Procédé selon la revendication 18, **caractérisé en ce que**, à l'étape a) est additionnellement ajoutée au mélange une matière particulaire.

21. Procédé selon l'une ou l'autre des revendications 18 ou 19, **caractérisé en ce que** les reliefs sont formés par fixation d'une matière particulaire sur le matériau de base en céramique oxydée.

22. Procédé selon l'une ou l'autre des revendications 20 ou 21, **caractérisé en ce que** la matière particulaire est une matière moulue résistante à la température, qui est, de préférence choisie dans le groupe constitué par la pierraille broyée, la chamotte, l'argile, les minéraux, les poudres de céramiques, comme le SiC, le verre, la chamotte de verre, et leurs mélanges.

23. Procédé selon l'une quelconque des revendications 20 à 22, **caractérisé en ce que** la dimension moyenne des particules de la matière particulaire va jusqu'à 1500 nm, et se situe de préférence de 50 nm à 700 nm, et plus préférentiellement de 50 nm à 200 nm.

24. Procédé selon l'une quelconque des revendications 18 à 23, **caractérisé en ce que** l'initiateur utilisé à l'étape a) est un régulateur de viscosité organique.

25. Procédé selon la revendication 24, **caractérisé en ce que** le régulateur de viscosité organique est une carboxyméthylcellulose.

26. Procédé selon l'une quelconque des revendications 18 à 25, **caractérisé en ce que** l'agent d'adhérence utilisé à l'étape a) est un polysiloxane.

27. Procédé selon l'une quelconque des revendications 18 à 26, **caractérisé en ce que**, à l'étape a), on utilise de l'eau comme phase liquide.

28. Procédé selon l'une quelconque des revendications 18 à 27, **caractérisé en ce que** l'adhérence entre le revêtement à activité photo-catalytique et le matériau de base en céramique oxydée est améliorée en irradiant, par un rayonnement laser, un rayonnement IR ou un rayonnement UV, le revêtement poreux de céramique oxydée à activité photo-catalytique obtenu à l'étape c).

29. Procédé selon l'une quelconque des revendication 18 à 28, **caractérisé en ce que** la poudre de céramique oxydée à activité photo-catalytique utilisée à l'étape a) contient des matières additionnelles qui sont choisies dans le groupe constitué par Al₂O₃, SiO₂ et leurs mélanges.

30. Procédé selon l'une quelconque des revendications 18 à 29, **caractérisé en ce que**, dans le matériau de base en céramique oxydée du corps moulé sont contenues des matières à activité photo-catalytique qui sont choisies dans le groupe constitué par TiO₂, Al₂O₃, SiO₂ et leurs mélanges.

31. Procédé selon l'une quelconque des revendications 18 à 29, **caractérisé en ce que** les particules de la poudre de céramique oxydée à activité photo-catalytique utilisée à l'étape a) présentent une taille de l'ordre de 5 nm à 100 nm, et de préférence de 10 nm à 50 nm.

32. Procédé selon l'une quelconque des revendications 18 à 31, **caractérisé en ce que** le TiO₂ contenu dans la poudre de céramique oxydée à activité photo-catalytique et/ou dans le matériau de base en céramique oxydée est présent, au moins en partie, et de préférence à raison d'au moins 40% du poids total de TiO₂ sous la forme à structure anatase.

33. Procédé selon l'une quelconque des revendications 18 à 32, **caractérisé en ce que** le TiO₂ contenu dans la poudre de céramique oxydée à activité photo-catalytique et/ou dans le matériau de base en céramique oxydée est présent à raison d'au moins 70% du poids total de TiO₂ sous la forme à structure anatase.

34. Procédé selon l'une quelconque des revendications 18 à 33, **caractérisé en ce que** le TiO₂ contenu dans la poudre de céramique oxydée à activité photo-catalytique et/ou dans le matériau de base en céramique oxydée consiste en un mélange de 70% en poids d'anatase et de 30% en poids de rutile.

35. Procédé selon l'une quelconque des revendications 18 à 34, **caractérisé en ce que** la couche préparée à l'étape b) est durcie à l'étape c) par séchage à une température allant jusqu'à 300°C et/ou par calcination à une température supérieure à 300°c, allant jusqu'à 1100°C.

36. Procédé selon la revendication 35, **caractérisé en ce que** la couche obtenue à l'étape b) est pré-séchée avant la calcination à l'étape c), par volatilisation au moins partielle de la phase liquide.

37. Procédé selon l'une quelconque des revendications 18 à 36, **caractérisé en ce que** le revêtement durci à l'étape c) est rendu hydrophobe par création d'une surface superhydrophobe, cette surface superhydrophobe présentant un angle de contact ou angle périphérique pour l'eau d'au moins 140°.

38. Procédé selon l'une quelconque des revendications 18 à 34, **caractérisé en ce que**, à l'étape a) est ajouté additionnellement un agent d'hydrophobation, et le revêtement obtenu à l'étape b) est durci à l'étape c) par séchage à une température allant jusqu'à 300°C.

39. Procédé selon l'une ou l'autre des revendications 37 ou 38, **caractérisé en ce que**, en vue de l'hydrophobation on utilise une molécule hybride organique-non organique, de préférence une solution de polysiloxane.

40. Procédé selon l'une ou l'autre des revendications 37 ou 38, **caractérisé en ce que**, en vue de l'hydrophobation on utilise un ormocère, un alkylsilane et/ou un fluorosilane, de préférence en mélange avec de la SiO₂.

41. Procédé selon l'une quelconque des revendications 37 à 40, **caractérisé en ce que**, en vue de l'obtention d'une surface superhydrophobe avec des reliefs, on ajoute une matière particulaire hydrophobisante.

42. Utilisation de TiO₂ à haute dispersion obtenu par hydrolyse à la flamme de TiCl₄, dans un revêtement d'oxycéramique destiné à des tuiles de toit, des briques, des briques vernissées ou une paroi de façade.
